# FASCICULE DE BREVET EUROPEEN

(11) **EP 3 743 230 B1**
(45) Date de publication et mention de la délivrance du brevet: **04.05.2022**
(21) Numéro de dépôt: 19700607.5
(22) Date de dépôt: 18.01.2019
(51) Int. Cl.: B21J 5/10, B21K 1/06, B21C 23/08, B21C 33/00, B21K 21/00, B21C 37/04, B21J 1/00

(54) **PROCÉDÉ DE FABRICATION D'UNE PIÈCE CREUSE EN UN MATÉRIAU MÉTALLIQUE ET UTILISATION DE CE PROCÉDÉ POUR FABRIQUER UNE TIGE OU UN BALANCIER DE TRAIN D'ATTERRISSAGE**
VERFAHREN ZUR HERSTELLUNG EINES HOHLTEILS AUS EINEM METALLISCHEN WERKSTOFF UND VERWENDUNG DIESES VERFAHRENS ZUR HERSTELLUNG EINER FAHRWERKSSTANGE ODER EINES FAHRWERKTRÄGERS
METHOD FOR PRODUCING A HOLLOW PART MADE OF A METAL MATERIAL AND USE OF THIS METHOD FOR PRODUCING A LANDING GEAR ROD OR BEAM

(30) Priorité: 22.01.2018 FR 1850463
(43) Date de publication de la demande: 02.12.2020
(73) Titulaire: Aubert&Duval, 75015 Paris (FR)
(72) Inventeur: LE COLLEN, Yvon, 03170 MONTVICQ (FR); FOUCHER, Laurent, 09100 PAMIERS (FR)
(74) Mandataire: Lavoix
(86) Numéro de dépôt international: PCT/EP2019/051211
(87) Numéro de publication internationale: WO 2019/141798

(56) Documents cités:
- EP-A1- 1 481 754
- WO-A1-2011/160109
- WO-A1-2012/152687
- WO-A1-2013/093285
- CH-A- 334 031
- JP-A- 2009 125 802
- US-A- 1 966 602
- US-A1- 2002 113 094

## Description

La présente invention concerne la métallurgie, et plus particulièrement les procédés de transformation de lingots de matériaux métalliques à valeur matière élevée, notamment d'alliages de Ti ou de superalliages base nickel, pour l'obtention de pièces creuses.

Il doit être entendu que par « matériau métallique » au sens de l'invention, on comprend tout type de matériau métallique quel que soit sa composition, que ce soit un métal censé être pur, ce qui n'arrivera que dans des cas très particuliers, ou plus généralement un alliage métallique renfermant des quantités significatives d'au moins un élément en plus de son métal de base majoritaire.

L'obtention, par mise en forme de lingots, de pièces creuses en alliage métallique telles que des tubes sans soudure ou des parties de trains d'atterrissage d'avions, peut être réalisée au moyen de divers procédés connus.

Le plus classiquement et le plus simplement, on peut partir d'un lingot dudit alliage, et on le met en forme par forgeage et matriçage. Puis la partie creuse de la pièce est ménagée par usinage. La matière en excès est donc évacuée sous forme de copeaux. Cette façon de procéder est coûteuse, en ce qu'elle oblige à préparer un lingot dont une grande partie de la matière est destinée à ne pas se retrouver dans la pièce finale et à être mise au rebut. Certes, les copeaux peuvent être recyclés comme matière première de l'alliage dans le four d'élaboration, mais cela ne compense pas les coûts qui ont été inutilement engagés pour la fabrication d'un lingot dont la masse doit être sensiblement plus importante que celle du produit final. Et il faut aussi compter avec l'usure des outils d'usinage, qui représente une part importante du coût de fabrication. Ce procédé n'est donc pas idéal pour la fabrication de pièces de grandes dimensions et réalisées en un alliage à coût matière élevé, comme les alliages de Ti utilisés en aéronautique.

Une autre façon classique de procéder est de mettre en forme le lingot d'origine par expansion à chaud au moyen d'un poinçon, comme décrit par exemple dans le document FR-A-2 360 361 où ce procédé est optimisé par l'utilisation d'un poinçon conique et d'un lubrifiant. Ce procédé s'applique typiquement au cas de la fabrication des tubes sans soudure, et, de façon générale, de produits réalisés par filage, de section circulaire et constante. Une variante en est le procédé décrit dans FR-A-2 032 752 dans lequel des tubes sans soudure sont fabriqués à partir de pièces creuses produites par coulée continue qui sont ensuite forgées-laminées autour d'un mandrin. Dans EP-B1-1 814 679, un tube sans soudure est fabriqué à chaud à partir d'un lingot que l'on perce pour le transformer en lingot creux, puis qu'on étire par forgeage radial autour d'un mandrin indéformable introduit dans le lingot creux.

Mais là encore, seuls des produits filés de section constante peuvent être fabriqués par ce procédé.

Dans EP-A-2 786 814, on combine un forgeage d'une billette creuse qui a été percée à chaud sur toute sa longueur et dans laquelle un mandrin indéformable a été inséré, avec une mise en forme par banc poussant. Mais ce procédé n'est applicable qu'à la fabrication de pièces creuses qui ont un côté fermé.

De manière générale, les poinçons ou les mandrins utilisés dans certains des procédés qui viennent d'être décrits n'ont pas vocation à être déformés pendant la fabrication du produit et sont réutilisables. Mais ils ne peuvent conduire qu'au ménagement de parties creuses de section constante.

Dans CH-A-332 916, on propose la fabrication d'une pièce telle qu'une aube de turbine ou de compresseur, présentant au moins une cavité interne pour son refroidissement. Cette fabrication est effectuée par, successivement, forgeage d'une ébauche de la pièce finie, réalisation d'un ou plusieurs perçages à des diamètres et positions bien définis, remplissage de ces perçages par un matériau susceptible d'être enlevé par la suite, notamment par dissolution dans un acide. Classiquement, un sable de fonderie peut constituer un tel matériau de remplissage. L'aube est ensuite matricée, ce qui entraîne aussi une déformation des perçages initialement cylindriques. Les perçages sont ensuite débarrassés de leur matériau de remplissage et le profil extérieur de l'aube est usiné. L'aube finale présente donc un ou des canaux de forme(s) pouvant être non cylindrique(s) à la suite du matriçage. Le matériau de remplissage des canaux ayant été détruit après le matriçage, il n'est pas réutilisable. Son enlèvement est, cependant, compliqué par le fait que les perçages ont été déformés pendant le matriçage, et que même si, initialement, les canaux avaient une forme cylindrique, ce ne sera en général plus le cas après le matriçage. L'enlèvement du matériau de remplissage devra donc généralement se faire par un autre procédé que l'usinage, d'où l'utilisation privilégiée de sable de fonderie et d'acide. Mais l'utilisation d'acide pose d'évidents problèmes de sécurité et de recyclage des résidus, et peut aussi avoir des effets indésirables sur la surface de la pièce à l'intérieur des canaux, voire aussi à l'extérieur de la pièce si l'acide entre en contact avec lui. D'autre part, la maîtrise très précise des dimensions des orifices de la pièce finale n'est pas garantie, comme on ne peut pas les ajuster par usinage après l'enlèvement du matériau de remplissage, et que ce matériau de remplissage ne peut typiquement pas présenter de propriétés mécaniques très bien définies qui permettraient de garantir la reproductibilité de son comportement lors du matriçage.

Dans WO-A-2013/093285, qui est considéré comme l'état de l'art le plus proche de la revendication 1, on décrit un procédé de fabrication d'un arbre de turbomachine, dans lequel un lopin est foré ou percé, on introduit dans l'orifice résultant du forage ou du perçage un insert en un matériau ayant une contrainte d'écoulement proche de celle du matériau du lopin, l'insert est retenu axialement dans l'alésage du lopin en appliquant des points de soudure aux extrémités axiales, on réalise un forgeage de l'ensemble, et on retire l'insert par usinage, dilatation différentielle ou attaque chimique.

Le but de l'invention est de procurer aux fabricants de pièces creuses, qui sont souvent de grandes dimensions et réalisées en un alliage coûteux, un procédé de fabrication qui d'une part, permette d'éviter d'avoir recours à un usinage de cet alliage coûteux pour ménager l'essentiel de la partie creuse, d'autre part permette néanmoins la réalisation de l'espace intérieur de la pièce creuse avec une précision dimensionnelle satisfaisante, en particulier si cet espace intérieur doit avoir un diamètre variable ;

A cet effet, l'invention a pour objet un procédé de fabrication d'une pièce creuse en un matériau métallique possédant des contraintes d'écoulement données à des températures données, caractérisé en ce que ledit procédé comprend les étapes suivantes :
- on prépare un lopin présentant deux extrémités, constitué par ledit matériau métallique de la pièce creuse, et au moins un mandrin perdu en un matériau qui, à toutes les températures auxquelles auront lieu les diverses déformations simultanées du lopin et du mandrin perdu, a une contrainte d'écoulement située dans l'intervalle de -30% à +20% de la contrainte d'écoulement du matériau du lopin auxdites températures, de préférence dans l'intervalle de -15% à +10%, mieux dans l'intervalle de -5% à +3% ;
- on applique un poinçon sur au moins une des extrémités dudit lopin pour réaliser l'expansion d'au moins une portion dudit lopin et créer au moins un espace interne audit lopin ;
- on insère un mandrin perdu dans ledit au moins un espace interne au lopin ;
- on réalise un sertissage dudit ou desdits mandrin(s) perdu(s) dans ledit lopin ;
- on réalise par co-forgeage une déformation simultanée dudit lopin et dudit au moins un mandrin perdu, avec un rapport d'homothétie K ;
- optionnellement on réalise au moins une autre déformation simultanée supplémentaire dudit lopin et dudit au moins un mandrin perdu ;
- et on réalise un usinage pour éliminer l'au moins un mandrin perdu et conférer sa configuration finale à l'espace intérieur de la pièce.

Lesdites déformations simultanées dudit lopin et dudit au moins un mandrin perdu peuvent s'effectuer, pour un écart des contraintes d'écoulement de -30% à +20%, avec un écart par rapport à la stricte homothétie de -15% à +10%, avec, pour un écart des contraintes d'écoulement de -15% à +10%, un écart par rapport à la stricte homothétie de -7% à + 5%, et pour un écart des contraintes d'écoulement de -5% à +3%, un écart par rapport à la stricte homothétie de -2,5% à +1,5%.

Ladite au moins une autre déformation simultanée peut comporter un matriçage.

Ladite au moins une autre déformation simultanée peut comporter un étirage.

Ledit lopin peut présenter une symétrie de révolution.

Ledit lopin peut être cylindrique.

Ledit mandrin perdu, ou au moins l'un desdits mandrins perdus, peut être cylindrique.

On peut chauffer ledit lopin avant l'application dudit poinçon.

Avant l'application dudit poinçon, on peut insérer ledit lopin dans le conteneur d'une presse, un espace étant ménagé entre ledit lopin et la paroi interne dudit conteneur pour autoriser l'expansion dudit lopin.

Le poinçon et le mandrin perdu peuvent être constitués par la même pièce.

Ledit lopin peut être en alliage de Ti de type Ti-10-2-3, lesdits mandrins perdus peuvent être chacun en un acier choisi parmi les aciers de type E28-3 et E24-2.

Dans une variante de réalisation, le lopin n'est pas expansé sur toute sa longueur et ledit mandrin perdu ne s'étend pas sur toute la longueur dudit lopin, et on retourne ledit lopin, on applique ledit poinçon sur l'autre extrémité dudit lopin, on réalise l'expansion d'une autre portion dudit lopin en créant un autre espace interne audit lopin, et on insère un autre mandrin perdu dans ledit autre espace interne audit lopin.

L'invention concerne aussi une utilisation du procédé précédent pour fabriquer une tige de train d'atterrissage.

L'invention concerne aussi une utilisation du procédé précédent pour fabriquer un balancier de train d'atterrissage.

Comme on l'aura compris, l'invention repose d'abord sur le remplacement de la portion inutile de la matière principale de la future pièce, qui constitue le lingot de départ, par une matière moins coûteuse qui pourra être facilement enlevée par son usinage partiel ou total lors de l'étape finale de fabrication de la pièce. Cette matière est mise sous la forme d'un mandrin à insérer dans l'ébauche de la pièce avant les dernières étapes de la mise en forme. Ce mandrin, contrairement à ce qui se pratiquait le plus souvent dans l'art antérieur, est une pièce consommable destinée à être éliminée lors des étapes finales de fabrication de la pièce. De plus, ce mandrin, que l'on appellera un « mandrin perdu », a la particularité de se déformer d'une façon quantitativement comparable à ce qui se passe pour la matière principale de la pièce lors de la mise en forme par forgeage ou matriçage à une température donnée, et de manière idéalement « homothétique », en tout cas « quasi-homothétique » par rapport à celle-ci. Les pièces creuses de grandes dimensions, comme on l'a dit, ne sont pas facilement fabricables par les procédés classiques, ou du moins sans sacrifier un volume conséquent de matière coûteuse. L'idée à la base de l'invention est de produire ces pièces creuses en utilisant les procédés classiques (forgeage, matriçage, etc...) et en remplaçant une partie de la matière de ladite pièce, partie qui ne serait de toute façon pas destinée à être livrée au client, par une autre matière facile à mettre en œuvre et qui pourra être moins coûteuse que le matériau de la pièce.

Par « quasi-homothétique », on veut dire que le rapport entre les dimensions de la pièce et du mandrin perdu est sensiblement conservé sur toutes les sections de la pièce lors de la mise en forme de celle-ci. Cette condition est réalisée si les contraintes d'écoulement des deux matériaux en jeu, pour un taux de déformation ε donné (on rappelle que le taux de déformation ε d'un matériau est donné par la formule ε = In (section initiale/section finale) In étant le logarithme népérien) et aux températures auxquelles sont effectuées les diverses étapes de mise en forme (ces températures ne sont pas forcément identiques pour toutes les étapes), sont relativement peu différentes. Le choix du matériau du mandrin perdu devra être effectué en conséquence.

La quasi-homothétie au sens de l'invention doit se comprendre comme signifiant que la dimension réellement obtenue ne s'écarte pas de davantage que ± 10% de ce que procurerait une homothétie rigoureuse de la déformation du matériau.

Egalement, une particularité importante de l'invention est que le perçage du lopin est réalisé sans enlèvement de matière, au moyen d'un poinçon appliqué sur une extrémité du lopin et qui provoque une expansion dudit lopin. De cette façon, on évite toute perte du matériau généralement coûteux qui constitue le lopin. La seule perte de matière ne peut concerner que l'usinage du mandrin perdu, que l'on peut réaliser en un matériau nettement moins coûteux que celui du lopin.

Le mandrin perdu ne doit pas, selon l'invention, se comporter exactement comme un outil de mise en forme classique dont les dimensions restent substantiellement inchangées entre le début et la fin de la transformation. Il doit se déformer en même temps que l'ébauche de la pièce, ce qui implique qu'il ne peut de toute façon pas être réutilisé pour la fabrication d'une autre pièce similaire à la première et qu'il n'y a pas de sérieux inconvénients à le détruire après la mise en forme. Les copeaux du mandrin perdu pourront être recyclés dans un four de fusion, par exemple pour contribuer à la fabrication d'un autre mandrin perdu. Dans la pratique, ce mandrin perdu pourra souvent être fabriqué dans un matériau nettement moins coûteux que le matériau de la pièce, et les inconvénients financiers à utiliser un mandrin perdu seront minimes par rapport aux économies sur le matériau et le procédé de fabrication de la pièce que cette utilisation d'un mandrin perdu selon l'invention permettra de réaliser.

Il est préférable que le mandrin perdu se déforme plus, préférentiellement légèrement plus, que l'ébauche de la pièce lors de la transformation, donc que sa contrainte d'écoulement (la contrainte à partir de laquelle on obtient une déformation plastique) soit, à ce moment, inférieure à celle du matériau de la pièce (sachant que plus la contrainte d'écoulement est élevée, plus le matériau est difficile à mettre en forme).

Il est à noter que la contrainte d'écoulement d'un matériau, à une température et une vitesse de déformation données, dépend sensiblement du taux de déformation qui est appliqué audit matériau. Il se peut que pour des taux de déformation faibles, un matériau de la pièce donné ait une contrainte d'écoulement plus élevée qu'un matériau du mandrin perdu donné, et que, pour ces deux mêmes matériaux, ce soit le contraire pour des taux de déformation élevés. C'est, par exemple, ce qui se passe pour l'alliage Ti 10-2-3 et l'acier E24-2 qui seront donnés en exemple plus loin.

De manière générale la contrainte d'écoulement du mandrin perdu à la température de chacune des transformations que subissent simultanément l'ébauche de la pièce et le mandrin perdu, et pour le taux de déformation prévu lors de chacune de ces étapes, doit être comprise entre celle du matériau de la pièce - 30% et celle du matériau de la pièce + 20%, de préférence entre celle du matériau de la pièce - 15% et celle du matériau de la pièce + 10%, mieux entre celle du matériau de la pièce - 5% et celle du matériau de la pièce + 3%. Une différence de ± 20% sur les taux de déformation ε engendrera une différence de ± 10% sur le rapport de transformation, c'est-à-dire sur le rapport entre les dimensions de la pièce ou du mandrin perdu avant et après la transformation.

On note que ces intervalles ne sont pas centrés sur zéro. C'est parce que, comme on l'a dit, on préfère en général que le matériau du mandrin perdu ait une plus grande capacité à être déformé que le matériau de la pièce à former. Si le mandrin se comporte comme un outil (autrement dit, se déforme très franchement moins que la pièce à former), on risque un problème de modification structurelle (microstructure) de la pièce à former. Si le mandrin a une contrainte d'écoulement très faible (autrement dit, s'il est trop déformable par rapport à la pièce à former), on risque de ne pas pouvoir respecter les exigences dimensionnelles sur la pièce finale.

Dans le cas des pièces de formes relativement complexes pour lesquelles le taux de déformation diffère selon les parties de la pièce, c'est la partie subissant la déformation la plus forte qui doit servir de référence pour la détermination du rapport optimal entre les contraintes d'écoulement des deux matériaux.

Pour certains matériaux comme les alliages de Ti du type Ti-10-2-3 (alliage de Ti à 10% de V, 2% de Fe et 3% d'AI, ces teneurs étant données en % pondéraux comme toutes les teneurs des différents éléments des divers alliages qui figureront dans le restant de ce texte) qui est l'un des matériaux connus particulièrement concernés par l'invention, la contrainte d'écoulement, à une température donnée, peut varier assez sensiblement en fonction inverse du taux de déformation. Ainsi, pour le Ti-10-2-3, à 750°C cette contrainte d'écoulement est de 200 MPa pour un taux de déformation proche de zéro, de 160 MPa pour un taux de déformation de 0,5 et 120 MPa pour un taux de déformation de 2. La contrainte d'écoulement est déterminée par des essais de traction à chaud suivant la norme NF EN ISO 6892-2.

Le choix des matériaux de l'ébauche de la pièce et du mandrin perdu vont aussi déterminer l'écart par rapport à la stricte homothétie des déformations que l'on va constater lors de l'exécution du procédé de l'invention. L'homothétie des déformations est une conséquence des homothéties initiale et finale entre pièce et mandrin, en particulier lorsque ce sont des pièces de révolution.

Si l'écart entre les contraintes d'écoulement, aux températures auxquelles ont lieu les déformations faisant intervenir simultanément les deux matériaux, est de l'ordre de ± 20%, l'écart par rapport à la stricte homothétie entre les déformations de l'ébauche de la pièce et du mandrin perdu est de l'ordre de ± 10%. On a vu que cette limite de ± 10% était considérée comme l'écart par rapport à une homothétie stricte des déformations qui est tolérable dans le procédé selon l'invention.

De manière typique, pour un écart des contraintes d'écoulement de -30% à +20%, l'écart par rapport à la stricte homothétie sera au maximum de -15% à +10%. Un écart plus important que -30% sur les contraintes d'écoulement ne conduira donc pas à une homothétie satisfaisante des déformations.

De même, pour un écart des contraintes d'écoulement de -15% à +10%, l'écart par rapport à la stricte homothétie sera au maximum de -7% à +5%.

De même, pour un écart des contraintes d'écoulement de -5% à +3%, l'écart par rapport à la stricte homothétie sera au maximum de -2,5% à +1,5%.

De manière générale, plus l'écart entre les contraintes d'écoulement est élevé, plus l'écart par rapport à la stricte homothétie risque d'être élevé. Si le mandrin perdu se déforme peu (en tout cas moins que l'ébauche de la pièce), et se comporte donc comme un véritable outil de mise en forme, il y a un risque de modification indésirable de la microstructure de l'ébauche. Inversement, si le mandrin perdu se déforme trop, il y a un risque de ne pas pouvoir respecter les exigences dimensionnelles sur l'ébauche de la pièce après sa mise en forme.

Les exemples selon l'invention qui seront donnés plus loin ont été mis en œuvre avec une vitesse de déformation standard de 0,5 s⁻¹, mais l'invention ne se limite pas à l'utilisation d'une vitesse de déformation de cet ordre. Une vitesse de déformation de jusqu'à 1,2 s⁻¹, par exemple, serait envisageable.

A titre d'exemples non limitatifs, on peut citer, comme couples [matériau de l'alliage ; matériau du mandrin], et comme température de transformation de ces couples, les exemples suivants :
- Pour la pièce : alliage Ti-10-2-3 (alliage de Ti à 10% de V, 2% de Fe et 3% d'AI) ; et pour le mandrin perdu : acier de construction métallique de type E28-3 (désigné aussi par les références St44-3U et 1.0143) à C ≤ 0,18% ; Mn ≤ 1,5% ; P ≤ 0,035% ; S ≤ 0,035% ; N ≤ 0,012% ; Cu ≤ 0,55% ; reste : Fe ; équivalent en carbone : ≤ 0,42% ; température de transformation : 750°C ;
- Pour la pièce : alliage Ti-10-2-3 ; pour le mandrin perdu : acier de construction métallique de type E24-2 (désigné aussi par les références St37-2 et 1.0037) à C ≤ 0,17% ; Si ≤ 0,30% ; Mn ≤ 1,40% ; P ≤ 0,045% ; S ≤ 0,045% ; reste : Fe ; température de transformation 750°C.

Bien entendu, il faut comprendre que les teneurs en éléments d'alliage et les températures qui sont données ici ne sont pas des valeurs très strictes, et que des écarts par rapport à ces valeurs sont acceptables, pourvu que, dans les faits, les contraintes d'écoulement des divers matériaux à leur température de transformation effective soient dans les gammes, obligatoires ou préférées, que l'on a indiquées.

Ces choix et leurs résultats peuvent être résumés dans le tableau 1.

**Tableau 1 : Exemples de choix de couples matériau de la pièce à former/matériau du mandrin perdu, et résultats de leurs essais**

| Exemples | Matériau | | Température de transformation | Contrainte d'écoulement (MPA), taux de déformation 0,5, température de déformation | | Ecarts Pièce/mandrin |
|---|---|---|---|---|---|---|
| | Pièce | Mandrin | | Pièce | Mandrin | |
| 1 | Ti-10-2-3 | E28-3 | 750 | 160 | 150 | -6% |
| 2 | Ti-10-2-3 | E24-2 | 750 | 160 | 140 | -13% |

On note qu'à 750°C pour des taux de déformation faibles (0,5), les mandrins testés en aciers E28-3 et E24-2 présentent des contraintes d'écoulement plus fortes que celles de la pièce en alliage Ti-10-2-3. Pour des taux de déformation à 750°C élevés , l'expérience montre que c'est l'inverse qui se produit. Dans le cas d'un mandrin en E24-2, c'est pour un taux de déformation de 0,8 que les contraintes d'écoulement de la pièce et du mandrin sont sensiblement égales, à 750°C et pour une vitesse de déformation de 0,5 s⁻¹.

L'invention sera mieux comprise à la lecture de la description qui suit, donnée en référence aux figures annexées suivantes :
- La figure 1 qui montre schématiquement le lopin et le mandrin perdu utilisés dans une première variante du procédé selon l'invention pour la fabrication d'une pièce à symétrie de révolution, creuse sur toute sa longueur ;
- La figure 2 qui montre en coupe longitudinale ledit lopin après qu'il a été foré sur toute sa longueur en vue de l'étape de fabrication suivante ;
- La figure 3 qui montre en coupe longitudinale le lopin foré placé dans le conteneur avant l'opération d'expansion, et le poinçon qui s'apprête à réaliser l'expansion du lopin dans le conteneur ;
- La figure 4 qui montre de la même façon le lopin en cours d'expansion, avant que l'on n'enlève la bague de centrage qui maintient le lopin en position dans les premiers stades de l'expansion ;
- La figure 5 qui montre le lopin dans le conteneur, en fin de la phase d'expansion ;
- La figure 6 qui montre de la même façon le lopin dans le conteneur, le mandrin perdu ayant été inséré dans l'espace ménagé par le poinçon à cet effet ;
- La figure 7 qui montre en coupe longitudinale l'ensemble formé par le lopin et le mandrin perdu à sa sortie du conteneur ;
- La figure 8 qui montre en coupe longitudinale ledit ensemble après son co-forgeage ;
- La figure 9 qui montre en coupe longitudinale ledit ensemble pendant l'opération de forage qui permet de détruire le mandrin perdu et d'ajuster le diamètre intérieur de la pièce fabriquée à partir du lopin ;
- Les figures 10 à 16 qui montrent schématiquement, lors de la mise en œuvre d'une deuxième variante de l'invention pour la fabrication d'une tige de train d'atterrissage, les étapes qui permettent d'obtenir un ensemble lopin-mandrin perdu dans lequel le mandrin perdu n'est pas présent sur toute la longueur du lopin ;
- La figure 17 qui montre ce même ensemble après mise en forme par refoulement de la tête de la tige ;
- La figure 18 qui montre ce même ensemble après étirage du fût de la tige ;
- Les figures 19 à 21 qui montrent la mise en forme dudit ensemble par aplat dans une presse et matriçage sur chant ;

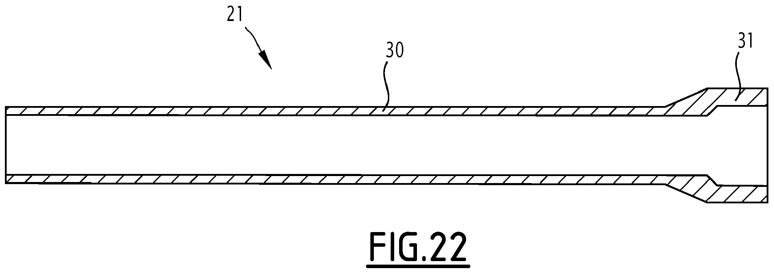

- La figure 22 qui montre en section longitudinale la tige finale forée et usinée ;
- Les figures 23 à 30 qui montrent schématiquement, lors de la mise en œuvre d'une troisième variante de l'invention pour la fabrication d'un balancier de train d'atterrissage, les étapes qui permettent d'obtenir un ensemble formé par un lopin et deux mandrins perdus qui laissent une portion du lopin dans laquelle un mandrin perdu n'est pas présent ;
- La figure 31 qui montre ce même ensemble après un co-forgeage qui lui a donné une forme extérieure proche de celle du balancier final ;

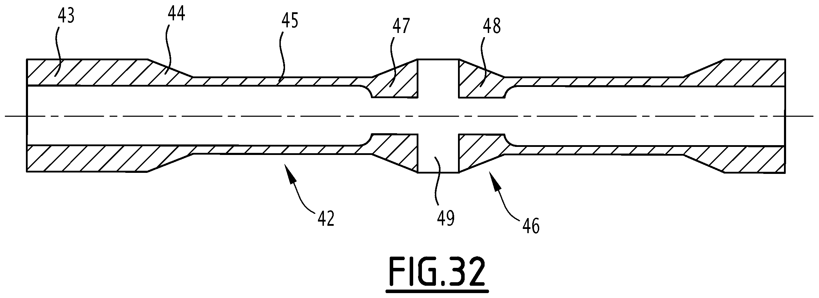

- La figure 32 qui montre ledit ensemble co-forgé après l'usinage qui a donné au balancier son état final.

Il doit être entendu que les dimensions des différentes pièces qui seront données dans les exemples de mise en œuvre de l'invention qui vont suivre seront les dimensions qui sont ou seraient mesurées à froid, donc indépendamment des dimensions réelles que les pièces concernées auraient aux différents stades de la fabrication, si elles sont à un état réchauffé lors de l'étape décrite.

Dans un premier exemple de mise en œuvre de l'invention, on va décrire un procédé faisant usage d'un seul mandrin, en l'occurrence un mandrin traversant, pour la fabrication d'une pièce creuse.

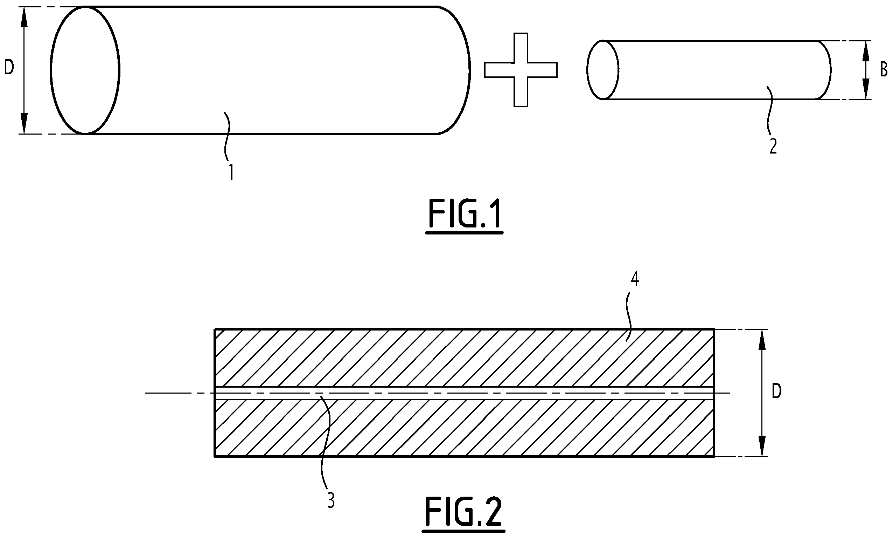

Dans un premier temps, on fabrique séparément, visibles sur la figure 1 :
- Un lopin 1 en alliage de Ti Ti-10-2-3, de diamètre D 430 mm et de longueur 2366 mm ; c'est dans ce matériau que sera réalisée la pièce ;
- Et un lopin 2 en acier E28-3 ou E24-2 de diamètre B 200 mm et de longueur 2366 mm, qui est destiné à constituer le mandrin perdu.

Puis on fore un trou de 20 à 25 mm de diamètre environ dans l'axe du lopin 2 en alliage de Ti, sur toute sa longueur, pour obtenir un orifice traversant 3. L'objectif de cette étape, facultative mais très conseillée au moins pour les pièces de grande longueur (de l'ordre de 10 fois le diamètre de la pièce ou davantage), est de servir d'amorçage à l'insertion du poinçon 10 qui réalisera l'expansion du lopin 2 en évitant qu'il ne dévie de sa trajectoire nominale pendant cette expansion. On obtient ainsi un lopin foré 4, visible sur la figure 2

Puis on réalise un réchauffage des lopins 4, 2 pour les amener à des températures adaptées aux traitements qu'ils vont subir et qui seront vus par la suite. Ces températures sont, évidemment, susceptibles de varier en fonction des conditions locales, notamment les temps de transfert entre les fours et l'installation d'expansion qui sera utilisée, et les temps que passent les lopins 4, 2 avant de subir la transformation. La détermination de ces températures pourra être faite par des simulations informatiques et des essais de routine.

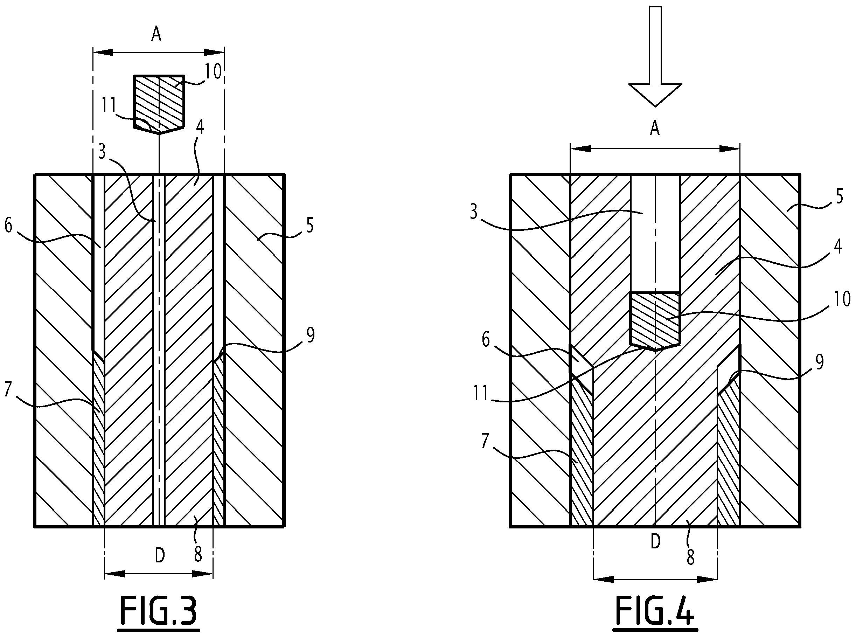

Puis on place dans une presse le lopin foré 4 chauffé. La presse comporte, dans l'exemple représenté, un conteneur 5 cylindrique, placé verticalement dans l'exemple représenté sur la figure 3, ce conteneur 5 comportant lui-même un logement central de diamètre A égal à 487 mm, donc supérieur à celui D du lopin foré 4 et supérieur ou égal au plus grand diamètre A1 que prendra la pièce creuse finale, de façon à laisser un espace libre 6 entre le lopin foré 4 et la paroi interne du conteneur 5 en vue de la future expansion du lopin foré 4. Une bague de centrage 7 est disposée dans la partie inférieure du conteneur 5 pour recevoir l'extrémité inférieure 8 du lopin foré 4. La bague de centrage 7 a un diamètre extérieur égal (à un léger jeu près, permettant sa mise en place et son retrait) au diamètre intérieur A du conteneur, et un diamètre intérieur égal (à un léger jeu près) au diamètre du lopin foré 4, par exemple de 440 mm dans la présente mise en œuvre de l'invention. L'extrémité supérieure 9 de la bague de centrage 7 est, de préférence, biseautée pour guider le lopin foré 4 à l'intérieur de la bague de centrage 7 lors de sa descente dans le conteneur 5. La figure 3 montre également le poinçon d'expansion 10 qui est, pour l'instant non opérationnel et est maintenu au-dessus du conteneur 5 en attendant l'étape de fabrication suivante. Le diamètre de ce poinçon 10 est supérieur à celui B du mandrin perdu 2 pour autoriser la future introduction du mandrin perdu 2 dans l'espace créé par le poinçon 10. Par exemple, pour un diamètre nominal du mandrin perdu 2 de 200 mm, on peut prévoir un diamètre de 205 mm pour le poinçon 10, étant entendu que le mandrin perdu 2 sera utilisé à chaud et présentera alors un diamètre de 202 mm environ, alors que le poinçon 10 sera utilisé dans un état initialement froid, et ne subira qu'une faible dilatation lors de son utilisation.

Quoique non forcément obligatoire, l'utilisation du conteneur 5 et de la bague de centrage 7 est une mise en œuvre préférée de l'invention, comme elle permet d'assurer un bon contrôle dimensionnel de la mise en forme du lopin foré 4.

L'étape suivante, schématisée sur la figure 4, est un premier stade de l'expansion du lopin foré 4 au moyen du poinçon 10. Celui-ci a une extrémité inférieure 11 de forme conique qui facilite la pénétration et le centrage du poinçon 10 dans le lopin foré 4. La pointe du cône 11 est insérée dans l'orifice traversant 3, et le poinçon 10 descend en repoussant progressivement le métal chaud constituant le lopin foré 4 contre la paroi intérieure du conteneur 5 en lui faisant remplir l'espace 6 au fur et à mesure de l'avancement du poinçon 10. Cette expansion du lopin foré 4 se fait donc sans enlèvement de matière. On parvient ainsi à la situation montrée sur la figure 4, dans laquelle la partie supérieure du lopin foré 4 a pris un diamètre extérieur sensiblement égal à A, sans toutefois qu'une pression très forte ne s'exerce sur le conteneur 5, alors que la partie inférieure du lopin foré 4 n'a pas encore subi cette déformation, comme elle n'a pas été affectée par la progression du poinçon 10.

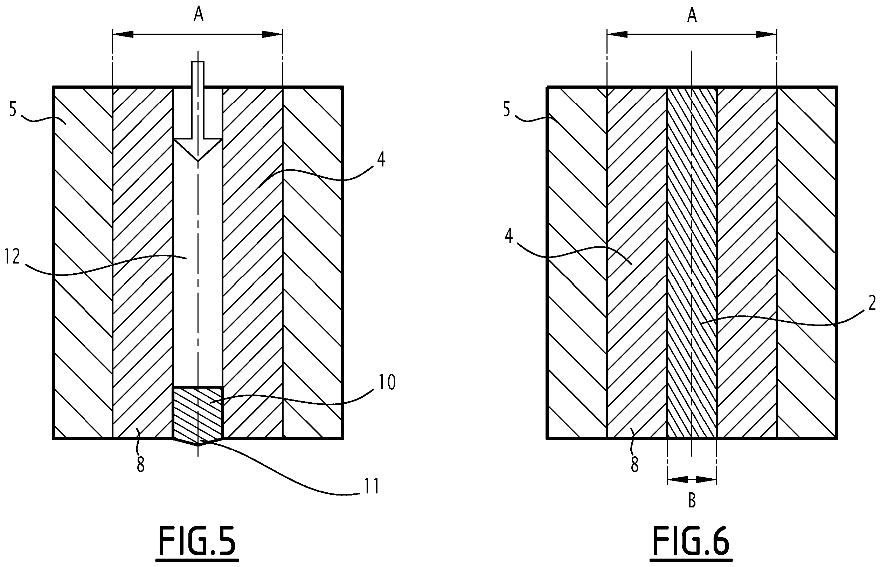

Puis on ôte la bague de centrage 7, qui n'est plus utile comme la partie supérieure du lopin foré 4 remplit à présent tout l'espace 6 jusqu'au niveau où se trouve le poinçon 10, et est donc elle-même apte à assurer le centrage du lopin foré 4 dans le conteneur 5. Ensuite, on poursuit la descente du poinçon 10 jusqu'à le faire émerger de la surface inférieure du conteneur 5 après qu'il a achevé l'expansion du lopin foré 4 sur toute sa longueur de façon à lui faire remplir la totalité de l'espace 6. Comme montré sur la figure 5, on se retrouve ainsi avec un lopin foré 4, avec un espace intérieur 12 qui présente uniformément un diamètre supérieur à celui B du mandrin perdu 2, comme on l'a dit plus haut. Le poinçon 10 est ensuite dégagé.

Dans l'étape suivante, vue sur la figure 6, le mandrin perdu 2, de diamètre B, est introduit dans ledit espace intérieur 12 du lopin foré 4. Le mandrin perdu 2 n'est pas forcément chaud lui-même, mais le lopin foré 4 doit encore être chaud lui-même. Il y a entre eux un jeu d'au moins 3 mm pour permettre cette insertion, que le sertissage qui suivra devra pouvoir combler.

Puis on réalise, par exemple à l'aide du poinçon 10, une légère compression du mandrin perdu 2 qui conduit à un sertissage dudit mandrin perdu 2 dans le lopin foré 4 de façon à ce qu'ils constituent un ensemble qui est indissociable sans une action extérieure délibérée.

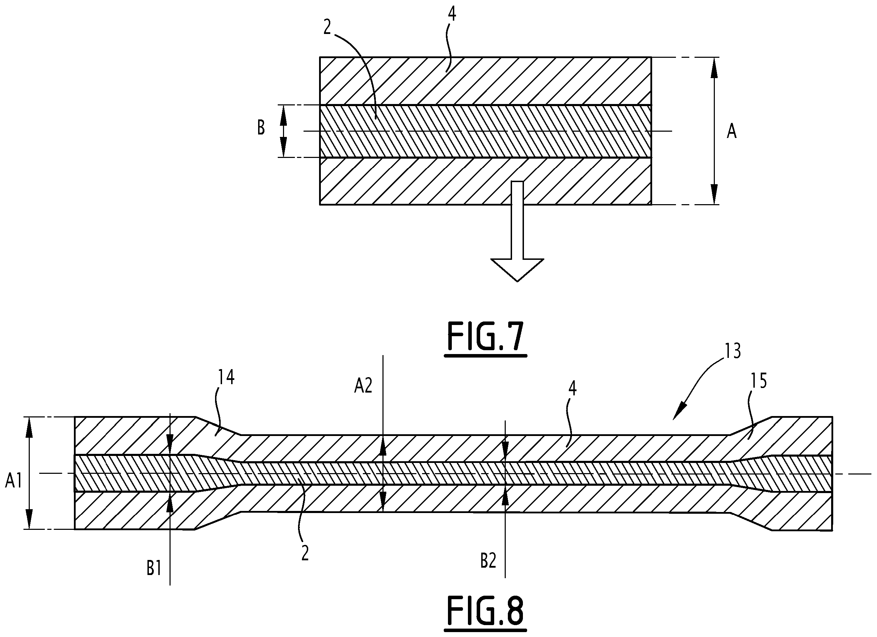

Puis l'ensemble lopin foré 4/mandrin perdu 2, qui se présente comme montré sur la figure 7 avec un rapport d'homothétie K qui est égal à A/B, est sorti du conteneur 5, et chauffé à une température de l'ordre de 750°C qui autorise son forgeage.

On réalise ensuite un co-forgeage de cet ensemble pour obtenir, dans l'exemple non limitatif représenté sur la figure 8, une ébauche 13 de section variable selon sa longueur. Le forgeage conduit à une diminution généralisée du diamètre extérieur de l'ensemble lopin foré 4/mandrin perdu 2 et à une augmentation de sa longueur. Cette diminution n'est pas homogène, en ce que, aux deux extrémités de l'ébauche 13, on ménage une portion où le diamètre extérieur de l'ébauche 13 est égal à une valeur A1 et où le diamètre du mandrin perdu 2 est égal à une valeur B1. La partie médiane de l'ébauche 13, qui, dans l'exemple représenté, représente la plus grande partie de sa longueur, présente, elle, un diamètre extérieur A2 conjugué à un diamètre du mandrin perdu 2 égal à B2. Entre les extrémités et la partie médiane de l'ébauche 13 se trouvent des zones de transition 14, 15 où les diamètres de l'ébauche 13 et du mandrin perdu 2 diminuent progressivement l'un et l'autre.

Selon l'invention, au cours du forgeage, on a conservé sur toutes les portions de l'ébauche 13 un rapport d'homothétie égal à K entre les diamètres respectifs de l'ébauche 13 et du mandrin perdu 4. On a ainsi les égalités K = A/B = A1/B1 = A2/B2, et les zones de transition 13, 14 sont aussi concernées par cette égalité.

On réalise ensuite, si utile, un matriçage de l'ensemble ébauche 13/mandrin perdu 4 sur une presse à matricer, pour conférer à l'ébauche 13 ses dimensions extérieures définitives.

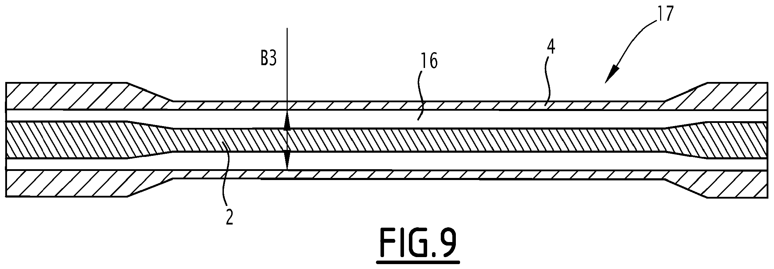

On réalise ensuite un usinage du forage axial représenté en cours d'exécution sur la figure 9. Il a pour buts :
- D'éliminer le mandrin perdu 2 ; à cet effet, on peut l'usiner en le mettant dans sa totalité sous forme de copeaux, ou n'en usiner que la périphérie, par exemple par carottage, de façon à permettre l'extraction hors de l'ébauche 13 de la partie du mandrin perdu 2 restée solide ;
- Et de conférer à l'espace intérieur 16 de la pièce finale 17 un diamètre unique (dans l'exemple représenté) de valeur B3 bien définie, là encore par enlèvement de matière sous forme de copeaux.

On n'échappe donc pas à la nécessité de réaliser un usinage pour obtenir l'espace intérieur 16 de la pièce finale 17. Mais par rapport aux usinages réalisés lors de procédés classiques cités précédemment, l'invention permet de diminuer considérablement la quantité de métal coûteux destiné à constituer la pièce finale 17 à éliminer sous forme de copeaux, qui a donc été préparée de façon superflue en termes de quantité de matière, et aussi en termes de quantité d'énergie nécessaire au réchauffage de ladite matière (quoique dans l'invention, il sera nécessaire de réchauffer aussi le mandrin perdu 2, de sorte que l'économie d'énergie globale ne sera pas significative si le mandrin perdu 2 n'a pas une capacité calorifique sensiblement plus faible que celle de l'alliage constituant la pièce finale 17). Ces copeaux peuvent toujours être valorisés en étant recyclés dans un four de fusion. Ils se retrouvent, certes, mélangés aux copeaux résultant de l'élimination par usinage du mandrin perdu 4. Mais on peut séparer aisément les deux sortes de copeaux par un procédé de tri magnétique, si le mandrin perdu 4 est en acier et si la pièce à fabriquer est en un alliage amagnétique. Une séparation densimétrique ou gravimétrique est aussi envisageable, lorsque les matériaux constituant la pièce finale 17 et le mandrin perdu 4 présentent un contraste de densité suffisant à cet effet, ce qui est le cas pour, respectivement, les alliages de Ti et les aciers, qui constituent des exemples privilégiés mais non exclusifs de matériaux utilisables dans l'application de l'invention.

Le processus de fabrication de la pièce finale 17 peut se conclure, de façon connue, par un traitement thermique destiné à lui conférer sa microstructure métallurgique définitive, et par un usinage, notamment des extrémités de la pièce finale 17, destiné à leur conférer leur forme définitive désirée en vue de l'utilisation prévue pour la pièce finale 17.

Dans une variante du procédé selon l'invention, on prévoit de ne pas utiliser un mandrin perdu totalement traversant comme dans la version précédente représentée sur les figures 1-9, mais un mandrin perdu non traversant, pour fabriquer une tige de train d'atterrissage comportant classiquement un fût et une chape.

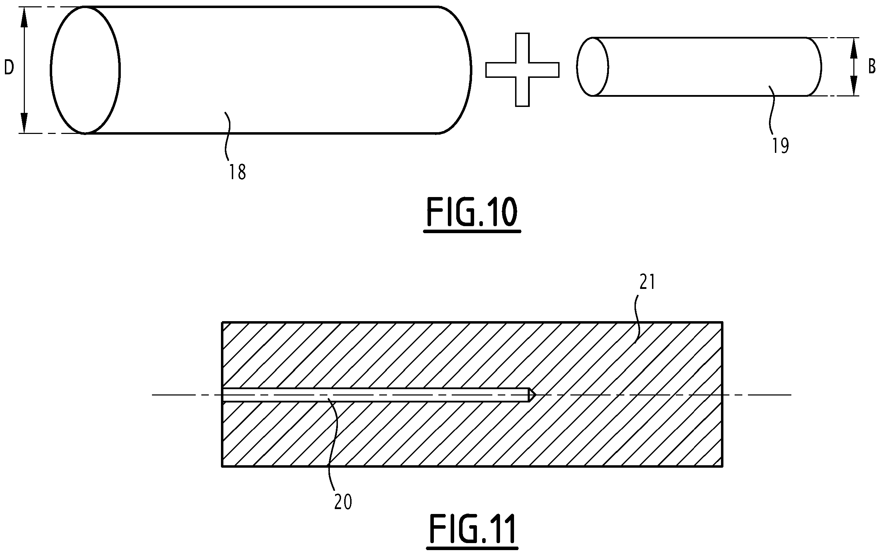

Dans un premier temps, on fabrique séparément, visibles sur la figure 10 :
- Un lopin 18 en alliage de Ti Ti-10-2-3, de diamètre D de 430 mm et de longueur 2366 mm (soit une section de 14.52 dm², un volume de 343.59 dm³, et une masse de 1584 kg) ; c'est dans ce matériau que sera réalisée la pièce ;
- Et un lopin 19 en acier E28-3 ou E24-2 de diamètre B de 200 mm et de longueur 1150 mm.

Puis on fore un trou de 20 à 25 mm de diamètre environ dans l'axe du lopin 18 en alliage de Ti, sur une longueur de 1150 mm, pour obtenir un orifice non traversant 20. L'objectif de cette étape, facultative mais très conseillée, en particulier sur les pièces longues, est de servir d'amorçage à l'insertion du poinçon 10 qui réalisera l'expansion du lopin 18 en évitant qu'il ne dévie de sa trajectoire nominale pendant cette expansion. On obtient ainsi un lopin en alliage de Ti partiellement foré 21, visible sur la figure 11.

Puis on réalise un réchauffage des lopins 21, 19, comme dans la variante précédente, pour les amener à des températures adaptées aux traitements qu'ils vont subir et seront vus par la suite.

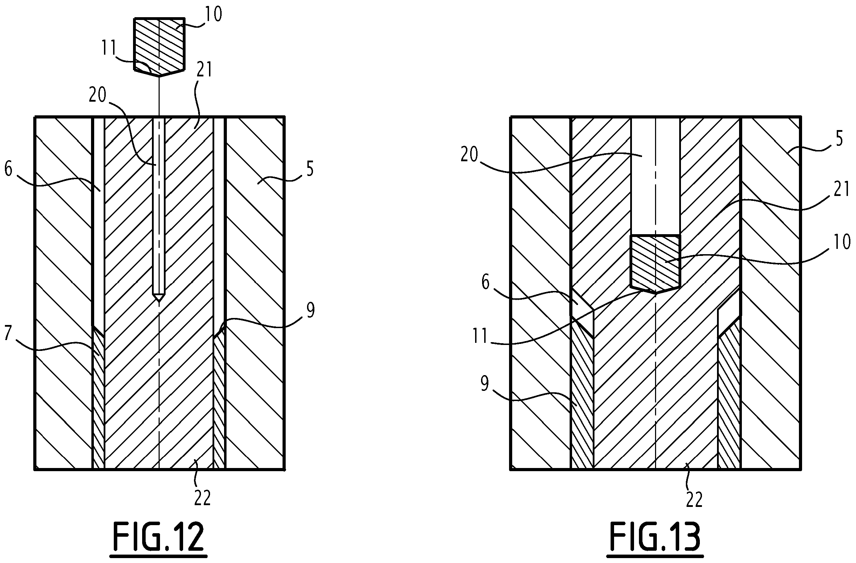

Puis on place dans une presse le lopin partiellement foré 21 chauffé. La presse comporte, dans l'exemple représenté, un conteneur 5 cylindrique, placé verticalement dans l'exemple représenté sur la figure 12, ce conteneur 5 comportant lui-même un logement central 6 de diamètre A = 490 mm, donc supérieur à celui D = 430 mm du lopin partiellement foré 21 et supérieur ou égal au plus grand diamètre A1 que prendra la pièce creuse finale. Une bague de centrage 7 est disposée dans la partie inférieure du conteneur 6 pour recevoir l'extrémité inférieure non forée 22 du lopin partiellement foré 21. La bague de centrage 7 a un diamètre extérieur égal (à un léger jeu près, permettant sa mise en place et son retrait) au diamètre intérieur A du conteneur, et un diamètre intérieur de 440 mm, donc égal (à un jeu de 10 mm près) au diamètre du lopin partiellement foré 21. L'extrémité supérieure 9 de la bague de centrage 7 est de préférence biseautée pour guider le lopin partiellement foré 21 à l'intérieur de la bague de centrage 7 lors de sa descente dans le conteneur 5. La figure 12 montre également le poinçon d'expansion 10 qui est, pour l'instant non opérationnel et est maintenu au-dessus du conteneur 5 en attendant l'étape de fabrication suivante. Le diamètre de ce poinçon 10 est de 210 mm, donc supérieur à celui B = 200 mm du mandrin perdu 19 pour autoriser la future introduction du mandrin perdu 19 dans l'espace créé par le poinçon 10.

L'étape suivante, schématisée sur la figure 13, est un premier stade de l'expansion du lopin partiellement foré 21 au moyen du poinçon 10. La pointe du cône 11 est insérée dans l'orifice non traversant 20 et le poinçon 10 descend en repoussant progressivement le métal chaud constituant le lopin partiellement foré 21 contre la paroi intérieure du conteneur 5 en lui faisant remplir l'espace 6 au fur et à mesure de l'avancement du poinçon 10. Cette expansion du lopin partiellement foré 21 se fait donc sans enlèvement de matière. On parvient ainsi à la situation montrée sur la figure 13, dans laquelle la partie supérieure du lopin foré 21 a pris un diamètre extérieur sensiblement égal à A (483 mm au lieu de 490 mm pour A), alors que la partie inférieure du lopin foré 4 n'a pas encore subi cette déformation, comme elle n'a pas été affectée par la progression du poinçon 10. Et l'orifice non traversant 20 d'origine a son diamètre augmenté jusqu'à 210 mm environ, soit le diamètre du poinçon 10. Le serrage entre le lopin 21 et le conteneur 5 ne doit pas être trop marqué pour rendre possible une extraction ultérieure aisée du lopin 21.

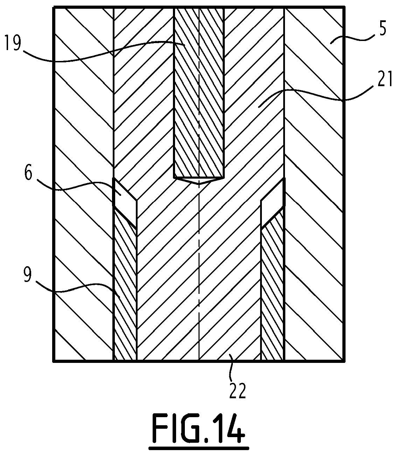

Puis, comme représenté sur la figure 14, on retire le poinçon 10 et on introduit dans l'orifice non traversant 20 ainsi élargi le mandrin perdu 19 préalablement chauffé à 750°C, le lopin 21 étant lui-même chaud. Et comme dans la variante précédente, cette introduction est suivie par un sertissage réalisé à l'aide d'une légère pression exercée, par exemple, au moyen du poinçon 10.

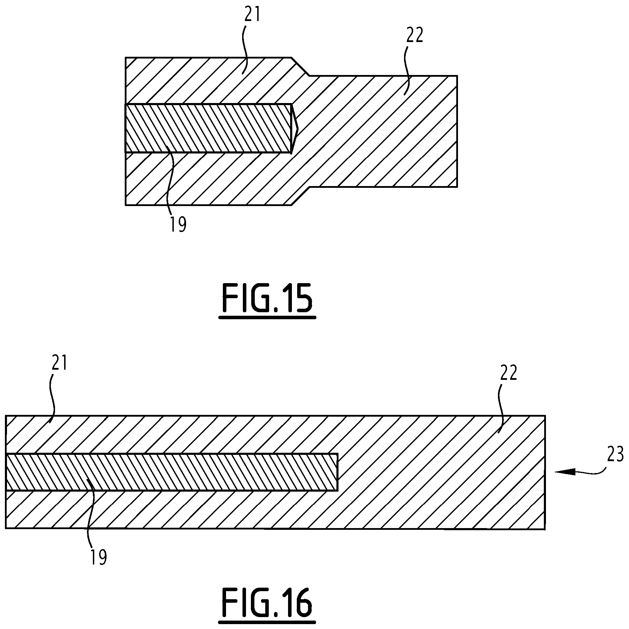

Puis on retire le lopin 21 du conteneur 5, et il se présente donc sous la forme représentée sur la figure 15, avec sa partie partiellement forée renfermant le mandrin perdu 19, ayant un diamètre extérieur, à froid, de 478 mm (donc légèrement inférieur au diamètre intérieur à froid du conteneur, pour permettre un jeu adéquat entre eux) le mandrin perdu 19 ayant sensiblement conservé son diamètre à froid de 200 mm. On a donc entre ces deux diamètres un rapport K = 478/200 = 2,39. La partie non forée du mandrin 21 a un diamètre de 430 mm à froid comme initialement.

On procède ensuite à un co-forgeage à 750°C de l'ensemble pièce 21/mandrin perdu 19 dans une presse, jusqu'à conférer à cet ensemble une forme extérieure cylindrique, dont le diamètre sera compatible avec l'outillage de refoulement de la tête de la tige, comme on le verra plus loin. Dans l'exemple représenté sur la figure 16, on obtient un ensemble 23 d'une longueur de 2610 mm et d'un diamètre extérieur uniforme de 430 mm. Le co-forgeage a réduit le diamètre à froid du mandrin perdu à 180 mm. On a donc un rapport K = 430/180 = 2,39, qui a donc été conservé par rapport à ce qu'il était avant le co-forgeage.

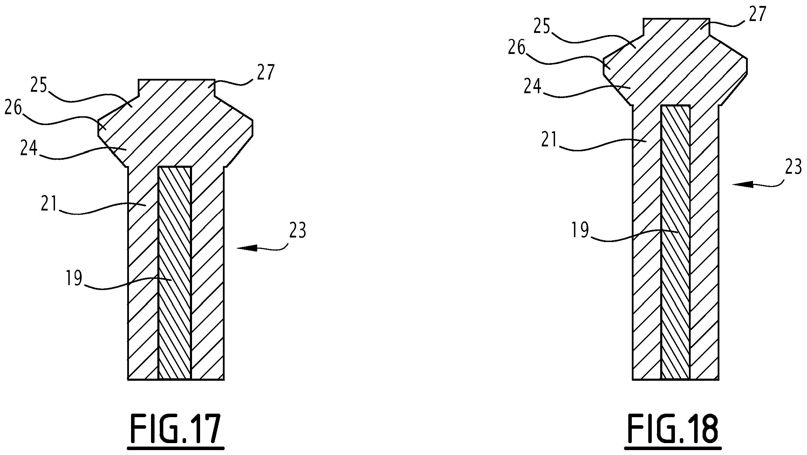

Puis on procède à un refoulement de la partie non forée 22 du lopin 21 sur un outillage adapté pour lui donner la forme et les dimensions adaptées à la réalisation de la chape de la pièce finale comme on le verra plus loin. Dans l'exemple représenté sur la figure 17, cette tête comporte deux portions tronconiques 24, 25 reliées par une courte partie cylindrique 26, et une courte partie cylindrique 27 constituant l'extrémité de la tige. La longueur totale de l'ensemble 23 est alors de 2057 mm, sachant que les dimensions de la partie forée du lopin 21 et du mandrin perdu 19 qu'elle renferme n'ont pas varié.

On réalise ensuite à 750°C un étirage de la partie forée du lopin 21 pour la faire passer d'un diamètre extérieur de 430 mm à un diamètre extérieur de 380 mm. Dans le même temps, le rapport K = 2,39 est conservé : le diamètre du mandrin perdu 19 passe à 159 mm. La figure 18 représente le résultat de cet étirage.

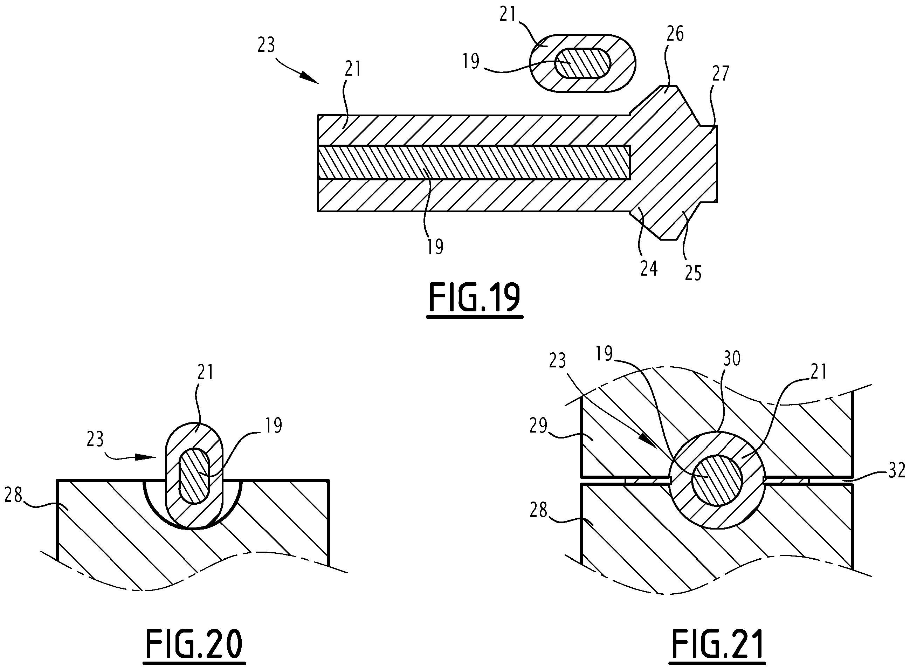

Puis, comme on le voit sur la figure 19, on réalise à 750°C sur une presse un aplat de la partie forée du lopin 21 pour lui conférer une épaisseur totale de 280 mm. La longueur de cette partie forée passe à 1915 mm et la longueur totale de l'ensemble 23 à 2646 mm. Le résultat est visible sur la figure 19.

On procède ensuite au matriçage de l'ensemble pour conférer à l'ensemble 23 la forme extérieure désirée pour la tige de train d'atterrissage. A cet effet, comme on le voit sur la figure 20, on place l'ensemble 23 sur la partie inférieure 28 d'une matrice. Puis, comme on le voit sur la figure 21, on ferme la matrice en appliquant sa partie supérieure 29, et cela confère sa forme extérieure définitive au lopin 21, avec un fût 30 de section à nouveau circulaire, avec un rapport d'homothétie K = 2,39 entre le diamètre intérieur du lopin 21 en alliage de Ti et le diamètre extérieur du mandrin perdu 19 qui est lui aussi restitué, et une chape 31 qui a la forme exacte désirée. Sous l'effet du matriçage, un peu de la matière du lopin 21 s'insère dans l'intervalle 32 séparant les deux parties 28, 29 de la matrice.

Un usinage de l'extérieur du lopin 21 permet d'enlever la matière qui s'était insérée dans l'intervalle 32.

On procède ensuite à une opération qui confère au lopin 21 sa forme et ses dimensions définitives. D'une part, on fore l'intérieur du fût 30, pour en enlever sous forme de copeaux la totalité du mandrin perdu 19 et une partie du métal du lopin 21, de façon à conférer au fût un diamètre intérieur de 230 mm. On réalise également un forage dans la chape 31 pour lui conférer le diamètre intérieur nominal désiré qui, dans l'exemple représenté, est plus élevé que celui du fût 30. Dans l'exemple représenté, la transition entre le diamètre intérieur nominal de la chape 31 et le diamètre intérieur du fût 30 s'effectue de façon progressive, le fond de la cavité forée dans la chape 31 ayant une forme biseautée.

La fabrication se conclut ordinairement par un traitement thermique et un usinage final qui donne au lopin 21 ses dimensions précises définitives et le transforme donc en tige de train d'atterrissage.

Dans une autre variante de l'invention, destinée par exemple à la fabrication de balanciers de trains d'atterrissage, on peut faire usage de deux mandrins perdus, de la façon qui va être expliquée.

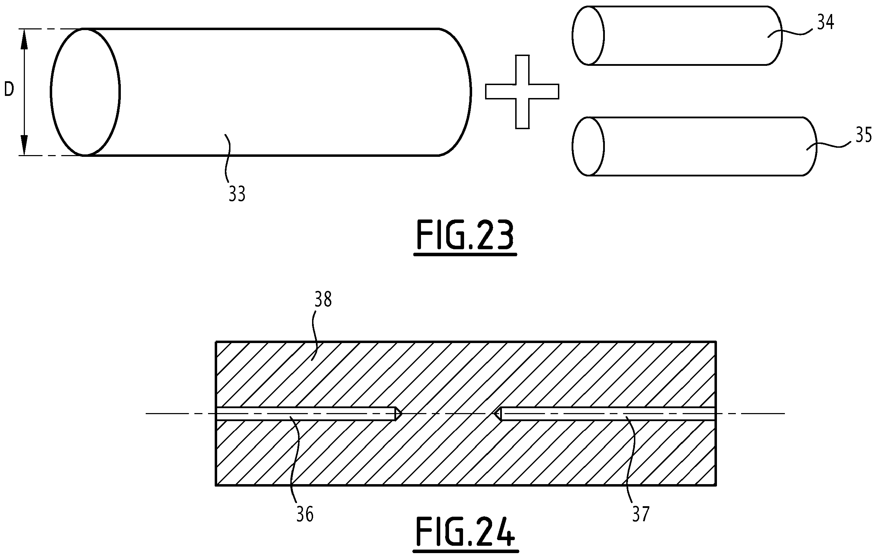

Dans un premier temps, on fabrique séparément, visibles sur la figure 23 :
- Un lopin 33 en alliage de Ti Ti-10-2-3, de diamètre D de 430 mm et de longueur 1677 mm (section : 14.52 dm², volume : 243.53 dm³, masse 1124 kg) ; c'est dans ce matériau que sera réalisée le balancier ;
- Et deux lopins 34, 35 en acier E28-3 ou E24-2 de diamètre B de 200 mm et de longueurs 640 et 750 mm respectivement destinés à constituer un premier 34 et un second 35 mandrins perdus.

Il doit être entendu que le fait que les deux mandrins perdus 34, 35 soient de longueurs différentes n'est imposé que par la géométrie désirée pour l'exemple décrit de balancier à fabriquer. Cette variante du procédé pourrait très bien utiliser deux mandrins perdus de même longueur, si cela était compatible avec la géométrie de la pièce à fabriquer.

Il n'est pas obligatoire que les deux mandrins perdus 34, 35 soient réalisés dans le même matériau, si on voyait un avantage à ce que ces matériaux aient des contraintes d'écoulement différentes, par exemple parce que la géométrie visée pour la pièce finale imposerait des déformations franchement différentes pour les portions mises en forme à l'aide de chacun des mandrins perdus 34, 35, et que ces déformations différentes seraient mieux assurées avec des mandrins perdus 34, 35 de propriétés différentes.

Puis on fore deux trous borgnes 36, 37 de 20 à 25 mm de diamètre environ dans l'axe du lopin 33 en alliage de Ti, sur une longueur de 630 mm pour le premier 36 et 747 mm pour le deuxième 37, pour obtenir deux orifices non traversants. L'objectif de cette étape, facultative mais très conseillée, notamment pour les pièces longues, est encore de servir d'amorçage à l'insertion des poinçons qui réaliseront l'expansion du lopin. On obtient ainsi un lopin partiellement foré à chacune de ses deux extrémités 38, visible sur la figure 24.

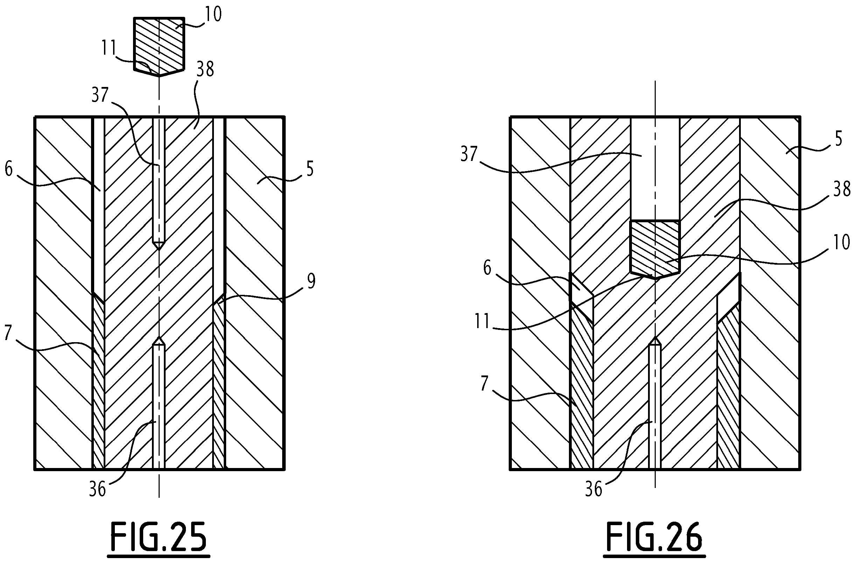

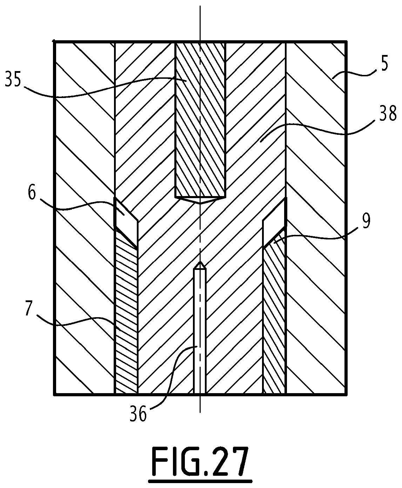

Puis, dans l'exemple préféré représenté, on place le lopin partiellement foré 38 dans un conteneur 5 équipé d'une bague de centrage 7, identique en constitution et en dimensions à celui utilisé dans les exemples précédents. Dans le cas représenté sur les figures 25 à 27, on a placé le côté du lopin partiellement foré 38 comportant le trou borgne le plus long 37 vers la partie supérieure du conteneur 5, de façon à ce que ce trou borgne 37 le plus long soit le premier à être élargi et allongé par le poinçon 10 lors de l'étape représentée sur la figure 26, correspondant qualitativement à celle représentée sur la figure 13 pour l'exemple précédent. Le poinçon 10 repousse l'alliage du lopin 38 contre la paroi interne du conteneur 5, sans serrage excessif. Il ménage un orifice non traversant 37 allongé et élargi, dont la longueur le rend apte à renfermer le second mandrin perdu 35, c'est-à-dire le mandrin perdu le plus long, préparé au préalable, comme montré sur la figure 27. Le second mandrin perdu 35 est ensuite serti, comme on l'a expliqué précédemment à propos des autres exemples.

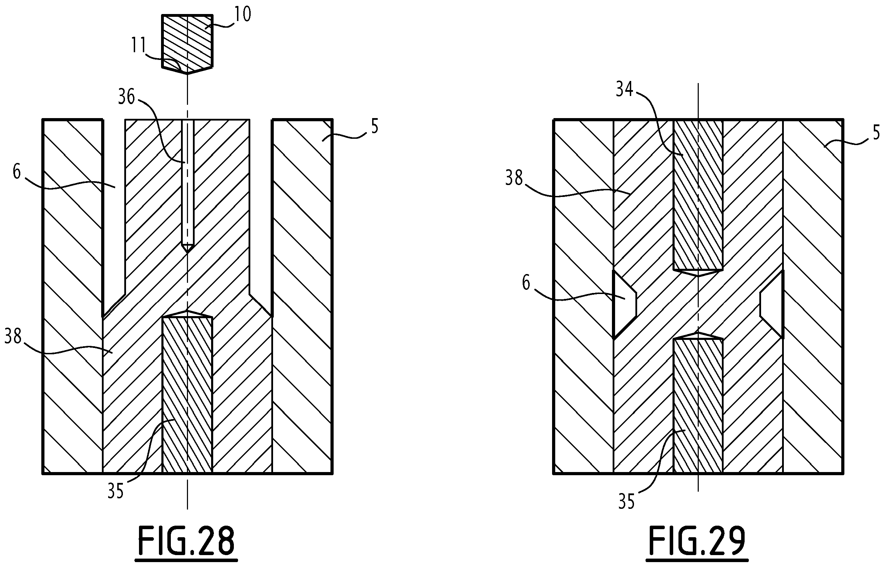

Puis le lopin 38 renfermant le second mandrin perdu 35 est extrait du conteneur 5, la bague de centrage 7 est ôtée du conteneur 5, et le lopin partiellement foré 38 est réintroduit dans le conteneur 5 avec, cette fois, le côté du lopin 38 comportant le trou borgne le plus court 36 vers la partie supérieure du conteneur 5. Le centrage du lopin 38 dans le conteneur 5 est à présent assuré par la partie du lopin 38 qui a été expansée lors de l'étape précédente. On se retrouve donc dans la situation de la figure 28, avec le poinçon 10 prêt à élargir le trou borgne 36 et à expanser le lopin 38 dans sa portion comportant le trou borgne 36 le plus court. Une fois l'expansion réalisée, on introduit le premier mandrin perdu 34, qui est le plus court des deux mandrins perdus 34, 35, dans le trou expansé 36, et on se retrouve dans la situation de la figure 29.

Autrement dit, le lopin 33 n'est pas expansé sur toute sa longueur et ledit second mandrin perdu 35, le plus long dans le cas représenté, ne s'étend donc pas sur toute la longueur dudit lopin 33 lors de son introduction et de l'expansion correspondante du lopin 33. On retourne ensuite le lopin 33 et on applique le poinçon 10 sur l'autre extrémité du lopin 33, on réalise l'expansion d'une autre portion du lopin 33 en créant un autre espace interne au lopin 33, et on insère le premier mandrin perdu 34, le plus court dans le cas représenté, dans ledit autre espace interne au lopin 33.

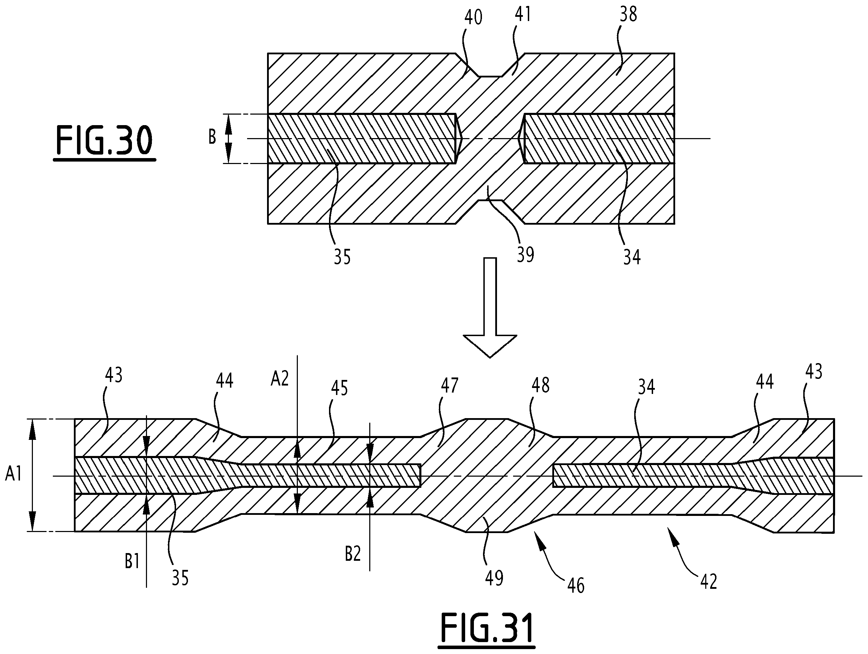

L'ensemble formé par le lopin expansé 38 et les deux mandrins perdus 34, 35 est extrait du conteneur et, comme on le voit mieux sur la figure 30, se présente sous la forme d'un lopin 38 comportant deux parties cylindriques renfermant chacune un mandrin perdu 34, 35 et reliées par une partie non perforée, comportant une portion centrale cylindrique 39 dont le diamètre est égal au diamètre d'origine du lopin 38 et deux portions tronconiques 40, 41 qui la relient aux parties cylindriques renfermant les mandrins perdus 34, 35. Le diamètre extérieur du lopin 38 est de 478 mm et le diamètre des mandrins perdus 34, 35 est de 200 mm. Le rapport K est donc égal à 478/200 = 2,39.

Puis on procède à un forgeage à 750°C du lopin 38 et des mandrins perdus 34, 35 qu'il renferme, pour obtenir la pièce 42 représentée sur la figure 31. A chaque extrémité de ladite pièce 42, on trouve successivement :
- Une portion cylindrique 43 de diamètre extérieur A1 = 393 mm, refermant l'un des mandrins perdus 34, 35 dont le diamètre a été réduit par le forgeage à 164 mm, ce qui a conservé le rapport K = 2,39 ;
- Une portion tronconique 44 où aussi bien le diamètre extérieur de la pièce 42 que le diamètre des mandrins 34, 35 diminue progressivement, en conservant le rapport K = 2,39 ;
- Une portion cylindrique 45 de diamètre extérieur A2 = 347 mm et où le diamètre B2 du mandrin perdu 34, 35 qu'elle renferme est de 145 mm, le rapport K = 2,39 ayant été conservé ;
- Une portion pleine 46 ne renfermant pas de portion de mandrin perdu et comportant deux portions tronconiques 47, 48 reliées par une portion cylindrique 49 de diamètre 403 mm, et dont la fonction sera vue plus loin.

En variante, cette pièce 42 peut être obtenue par un procédé comportant la réalisation d'un aplat puis d'un matriçage à chant et d'un usinage, comme dans la variante précédente.

Enfin, on termine la fabrication du balancier 42 par un usinage qui permet de donner au balancier ses dimensions extérieures définitives, d'ôter les mandrins perdus 34, 35 sous forme de copeaux et de ménager un diamètre intérieur du balancier 42 de 230 mm dans les parties où les mandrins perdus 34, 35 étaient présents, et un diamètre intérieur de 155 mm dans la partie où ils étaient absents correspondant à la portion pleine 46. En outre, cette portion 46 subit un perçage dans sa partie cylindrique 49, selon un axe perpendiculaire à l'axe longitudinal du balancier 42, pour permettre la connexion du balancier à l'amortisseur du train d'atterrissage.

Bien entendu, les exemples qui ont été décrits et représentés ne sont pas limitatifs, tant du point de vue des formes générales des pièces finales qui ont été décrites que de leurs dimensions.

L'utilisation du conteneur 5, dans lequel on introduit le lopin foré 4, 21, 38 ne constitue qu'un exemple privilégié de mise en œuvre de l'invention. On pourrait envisager de réaliser les diverses opérations de forage et d'introduction du ou des mandrin(s) perdu(s) 2, 19, 34, 35 sans l'assistance de ce conteneur 5 et de la bague de centrage 7 associée.

De même, le réchauffage du lopin foré 4, 21, 38 avant son introduction dans le conteneur 5 (ou, plus généralement, son forage par le poinçon 10) n'est pas absolument obligatoire.

Des modélisations et/ou des essais de routine pourront montrer à l'homme du métier si ces opérations seraient indispensables pour l'obtention d'un résultat satisfaisant.

Une autre variante de l'invention peut consister à utiliser comme poinçon 10 le mandrin perdu 2, 19, 34, 35 lui-même, en choisissant à cet effet, pour constituer le mandrin perdu 2, 19, 34, 35, un matériau aux propriétés mécaniques adéquates en ce qu'elles seraient compatibles avec les deux fonctions.

De même, l'invention ne se limite pas au cas où on part de lopins et de mandrins perdus de section circulaire, constante ou variable selon la longueur de la pièce, non plus qu'au cas où la pièce finale est dans sa totalité une pièce à symétrie de révolution. L'homme du métier pourra adapter aisément l'invention au cas où au moins certaines portions du produit final n'auraient pas une section circulaire, par exemple à la suite du matriçage ou d'un usinage. Un conteneur 5 et/ou un poinçon 10 de section(s) non cylindrique(s) pourraient contribuer à rapprocher le lopin ou son espace intérieur de la forme finale souhaitée en minimisant les déformations et usinages ultérieurs qui seraient nécessaires.

## Revendications

1. Procédé de fabrication d'une pièce creuse (17 ; 21 ; 46) en un matériau métallique possédant des contraintes d'écoulement données à des températures données, **caractérisé en ce que** ledit procédé comprend les étapes suivantes :
- on prépare un lopin (1 ; 18 ; 33) présentant deux extrémités, constitué par ledit matériau métallique de la pièce creuse (17 ; 21 ; 46), et au moins un mandrin perdu (2 ; 19 ; 34, 35) en un matériau qui, à toutes les températures auxquelles auront lieu les diverses déformations simultanées du lopin (1 ; 18 ; 33) et du mandrin perdu (2 ; 19 ; 34, 35), a une contrainte d'écoulement située dans l'intervalle de -30% à +20% de la contrainte d'écoulement du matériau du lopin (1 ; 18 ; 33) auxdites températures, de préférence dans l'intervalle de -15% à +10%, mieux dans l'intervalle de -5% à +3% ;
- on applique un poinçon (10) sur au moins une des extrémités dudit lopin (1 ; 18 ; 33) pour réaliser l'expansion d'au moins une portion dudit lopin (1 ; 18 ; 33) et créer au moins un espace interne (12 ; 20 ; 37) audit lopin (1 ; 18 ; 33) ;
- on insère un mandrin perdu (2 ; 19 ; 34, 35) dans ledit au moins un espace interne (12 ; 20 ; 36, 37) au lopin (1 ; 18 ; 33) ;
- on réalise un sertissage dudit ou desdits mandrin(s) perdu(s) (2 ; 19 ; 34, 35) dans ledit lopin (1 ; 18 ; 33) ;
- on réalise par co-forgeage une déformation simultanée dudit lopin (1 ; 18 ; 33) et dudit au moins un mandrin perdu (2 ; 19 ; 34, 35), avec un rapport d'homothétie K ;
- optionnellement on réalise au moins une autre déformation simultanée supplémentaire dudit lopin (1 ; 18 ; 33) et dudit au moins un mandrin perdu (2 ; 19 ; 34, 35) ;
- et on réalise un usinage pour éliminer l'au moins un mandrin perdu (2 ; 19 ; 34, 35) et conférer sa configuration finale à l'espace intérieur (12 ; 20 ; 37) de la pièce (17 ; 21 ; 46).

2. Procédé selon la revendication 1, **caractérisé en ce que** lesdites déformations simultanées dudit lopin (1 ; 18 ; 33) et dudit au moins un mandrin perdu (2 ; 19 ; 34, 35) s'effectuent, pour un écart des contraintes d'écoulement de -30% à +20%, avec un écart par rapport à la stricte homothétie de -15% à +10%, **en ce que** pour un écart des contraintes d'écoulement de -15% à +10%, l'écart par rapport à la stricte homothétie est de -7% à + 5%, et **en ce que** pour un écart des contraintes d'écoulement de -5% à +3%, l'écart par rapport à la stricte homothétie est de -2,5% à +1,5%.

3. Procédé selon l'une des revendications 1 ou 2, **caractérisé en ce que** ladite au moins une autre déformation simultanée comporte un matriçage.

4. Procédé selon l'une des revendications 1 à 3, **caractérisé en ce que** ladite au moins une autre déformation simultanée comporte un étirage.

5. Procédé selon l'une des revendications 1 à 4, **caractérisé en ce que** ledit lopin (1 ; 18 ; 33) présente une symétrie de révolution.

6. Procédé selon la revendication 5, **caractérisé en ce que** ledit lopin est cylindrique.

7. Procédé selon l'une des revendications 1 à 6, **caractérisé en ce que** ledit mandrin perdu, ou au moins l'un desdits mandrins perdus, est cylindrique.

8. Procédé selon l'une des revendications 1 à 7, **caractérisé en ce qu'**on chauffe ledit lopin (1 ; 18 ; 33) avant l'application dudit poinçon (10).

9. Procédé selon l'une des revendications 1 à 8, **caractérisé en ce qu'**avant l'application dudit poinçon (10), on insère ledit lopin (1 ; 18 ; 33) dans le conteneur (5) d'une presse, un espace étant ménagé entre ledit lopin (1 ; 18 ; 33) et la paroi interne dudit conteneur (5) pour autoriser l'expansion dudit lopin (1 ; 18 ; 33).

10. Procédé selon l'une des revendications 1 à 9, **caractérisé en ce que** le poinçon (10) et le mandrin perdu (2 ; 19 ; 34, 35) sont constitués par la même pièce.

11. Procédé selon l'une des revendications 1 à 11, **caractérisé en ce que** ledit lopin (1 ; 18 ; 33) est en alliage de Ti de type Ti-10-2-3, et **en ce que** lesdits mandrins perdus (2 ; 19 ; 34, 35) sont chacun en un acier choisi parmi les aciers de type E28-3 et E24-2.

12. Procédé selon l'une des revendications 1 à 11, **caractérisé en ce que** le lopin (33) n'est pas expansé sur toute sa longueur et ledit mandrin perdu (35) ne s'étend pas sur toute la longueur dudit lopin (33), et **en ce qu'**on retourne ledit lopin (33), on applique ledit poinçon (10) sur l'autre extrémité dudit lopin (33), on réalise l'expansion d'une autre portion dudit lopin (33) en créant un autre espace interne audit lopin (33), et on insère un autre mandrin perdu (34) dans ledit autre espace interne audit lopin (33).

13. Utilisation du procédé selon l'une des revendications 1 à 12 pour fabriquer une tige (21) de train d'atterrissage.

14. Utilisation du procédé selon la revendication 12 pour fabriquer un balancier de train d'atterrissage (46).

## Patentansprüche

1. Verfahren zur Herstellung eines hohlen Teils (17; 21; 46) aus einem metallischen Material, das bei gegebenen Temperaturen gegebene Fließspannungen besitzt, **dadurch gekennzeichnet, dass** das Verfahren die folgenden Schritte umfasst:
- hergestellt wird ein Rohling (1; 18; 33), der zwei Enden aufweist, der aus dem metallischen Material des hohlen Teils (17; 21; 46) besteht, und mindestens ein Verlierdorn (2; 19; 34, 35) aus einem Material hergestellt werden, das bei allen Temperaturen, bei denen die verschiedenen gleichzeitigen Verformungen des Rohlings (1; 18; 33) und des Verlierdorns (2; 19; 34, 35) erfolgen, eine Fließspannung im Bereich von -30 % bis +20 % der Fließspannung des Materials des Rohlings (1; 18; 33) bei den genannten Temperaturen aufweist, vorzugsweise in dem Bereich von -15 % bis +10 %, besser im Bereich von -5 % bis +3 %;
- angewendet wird ein Stempel (10) auf mindestens eines der Enden des Rohlings (1; 18; 33), um die Ausdehnung mindestens eines Abschnitts des Rohlings (1; 18; 33) zu bewirken und mindestens einen Innenraum (12; 20; 37) des Rohlings (1; 18; 33) zu schaffen;
- eingeführt wird ein Verlierdorn (2; 19; 34, 35) in den mindestens einen Innenraum (12; 20; 36, 37) des Rohlings (1; 18; 33);
- durchgeführt wird ein Bördeln des oder der Verlierdorne (2; 19; 34, 35) in dem Rohling (1; 18; 33);
- durchgeführt wird eine gleichzeitige Verformung des Rohlings (1; 18; 33) und des mindestens einen Verlierdorns (2; 19; 34, 35) durch gemeinsames Schmieden mit einem Homothetieverhältnis K;
- optional wird mindestens eine weitere ergänzende gleichzeitige Verformung des Rohlings (1; 18; 33) und des mindestens einen Verlierdorns (2; 19; 34, 35) durchgeführt;
- und es wird eine Bearbeitung durchgeführt, um den mindestens einen Verlierdorn (2; 19; 34, 35) zu entfernen und dem Innenraum (12; 20; 37) des Teils (17; 21; 46) seine endgültige Konfiguration zu verleihen.

2. Verfahren nach Anspruch 1, **dadurch gekennzeichnet, dass** die gleichzeitigen Verformungen des Rohlings (1; 18; 33) und des mindestens einen Verlierdorns (2; 19; 34, 35) bei einer Abweichung der Fließspannungen von -30 % bis +20 % mit einer Abweichung von der strengen Homothetisierung von -15 % bis +10 % erfolgen, indem bei einer Abweichung der Fließspannungen von -15 % bis +10 %, die Abweichung von der strengen Homothetie -7 % bis +5 % ist, und dass bei einer Abweichung der Fließspannungen von -5 % bis +3 % die Abweichung von der strengen Homothetie -2,5 % bis +1,5 % ist.

3. Verfahren nach einem der Ansprüche 1 oder 2, **dadurch gekennzeichnet, dass** die mindestens eine weitere gleichzeitige Verformung ein Gesenkschmieden umfasst.

4. Verfahren nach einem der Ansprüche 1 oder 3, **dadurch gekennzeichnet, dass** die mindestens eine weitere gleichzeitige Verformung ein Streckziehen umfasst.

5. Verfahren nach einem der Ansprüche 1 bis 4, **dadurch gekennzeichnet, dass** der Rohling (1; 18; 33) Rotationssymmetrie aufweist.

6. Verfahren gemäß Anspruch 5, **dadurch gekennzeichnet, dass** der Rohling zylindrisch ist.

7. Verfahren nach einem der Ansprüche 1 bis 6, **dadurch gekennzeichnet, dass** der Verlierdorn oder mindestens der eine der Verlierdorne zylindrisch ist.

8. Verfahren nach einem der Ansprüche 1 bis 7, **dadurch gekennzeichnet, dass** der Rohling (1; 18; 33) vor dem Anwenden des Stempels (10) erhitzt wird.

9. Verfahren nach einem der Ansprüche 1 bis 8, **dadurch gekennzeichnet, dass** vor Anwenden des Stempels (10) der Rohling (1; 18; 33) in den Behälter (5) einer Presse eingeführt wird, wobei zwischen dem Rohling (1; 18; 33) und der Innenwand des Behälters (5) ein Raum geschaffen wird, um die Expansion des Rohlings (1; 18; 33) zuzulassen.

10. Verfahren nach einem der Ansprüche 1 bis 9, **dadurch gekennzeichnet, dass** der Stempel (10) und der Verlierdorn (2; 19; 34, 35) aus demselben Teil bestehen.

11. Verfahren nach einem der Ansprüche 1 bis 11, **dadurch gekennzeichnet, dass** der Rohling (1; 18; 33) aus einer Ti-Legierung vom Typ Ti-10-2-3 besteht und dass die Verlierdorne (2; 19; 34, 35) jeweils aus einem Stahl bestehen, ausgewählt aus den Stählen vom Typ E28-3 und E24-2.

12. Verfahren nach einem der Ansprüche 1 bis 11, **dadurch gekennzeichnet, dass** der Rohling (33) nicht über seine gesamte Länge expandiert wird und der Verlierdorn (35) sich nicht über die gesamte Länge des Rohlings (33) erstreckt, und dass der Rohling (33) umgedreht wird, der Stempel (10) auf das andere Ende des Rohlings (33) angewendet wird, ein weiterer Abschnitt des Rohlings (33) expandiert wird, indem ein weiterer Innenraum des Rohlings (33) geschaffen wird, und ein weiterer Verlierdorn (34) in den weiteren Innenraum des Rohlings (33) eingeführt wird.

13. Verwendung des Verfahrens nach einem der Ansprüche 1 bis 12 zur Herstellung einer Stange (21) für ein Fahrwerk.

14. Verwendung des Verfahrens nach Anspruch 12 zur Herstellung eines Fahrwerk-Schwinghebels (46).

## Claims

1. A method for producing a hollow part (17; 21; 46) made of a metal material having given yield stresses at given temperatures, **characterized in that** said method comprises the following steps:
- preparing a blank (1; 18; 33) having two ends, made up of said metal material of the hollow part (17; 21; 46), and at least one sacrificial mandrel (2; 19; 34, 35) made of a material that, at all temperatures at which the various simultaneous deformations of the blank (1; 18; 33) and the sacrificial mandrel (2; 19; 34, 35), will take place, has a yield stress in the range from -30% to +20% of the yield stress of the material of the blank (1; 18; 33) at said temperatures, preferably in the range from -15% to +10%, ideally in the range from - 5% to +3%;
- applying a punch (10) on at least one of the ends of said blank (1; 18; 33) in order to produce the expansion of at least a portion of said blank (1; 18; 33) and to create at least one internal space (12; 20; 37) inside said blank (1; 18; 33);
- inserting a sacrificial mandrel (2; 19; 34; 35) in said one internal space (12; 20; 36, 37) of the blank (1; 18; 33);
- crimping said sacrificial mandrel(s) (2; 19; 34, 35) in said blank (1; 18; 33);
- producing, by co-forging, a simultaneous deformation of said blank (1; 18; 33) and said at least one sacrificial mandrel (2; 19; 34, 35), with a homothetic ratio K;
- optionally producing at least one other additional simultaneous deformation of said blank (1; 18; 33) and said at least one sacrificial mandrel (2; 19; 34, 35);
- and performing a machining in order to remove the at least one sacrificial mandrel (2; 19; 34, 35) and impart its final configuration to the internal space (12; 20; 37) of the part (17; 21; 46).

2. The method according to claim 1, **characterized in that** said simultaneous deformations of said blank (1; 18; 33) and said at least one sacrificial mandrel (2; 19; 34, 35) are done, for a deviation of the yield stresses of -30% to +20%, with a deviation relative to the strict homothety from -15% to +10% with, for a deviation in the yield stresses from - 15% to +10%, a deviation relative to the strict homothety from -7% to +5%, and for a deviation in the yield stresses from -5% to +3%, a deviation relative to the strict homothety from -2.5% to +1.5%.

3. The method according to claim 1 or 2, **characterized in that** at least one other simultaneous deformation comprises a die stamping.

4. The method according to claim 1 or 3, **characterized in that** at least one other simultaneous deformation comprises a drawing.

5. The method according to one of claims 1 to 4, **characterized in that** said blank (1; 18; 33) has a symmetry of revolution.

6. The method according to claim 5, **characterized in that** said blank is cylindrical.

7. The method according to one of claims 1 to 6, **characterized in that** said sacrificial mandrel, or at least one of said sacrificial mandrels, is cylindrical.

8. The method according to one of claims 1 to 7, **characterized in that** said blank (1; 18; 33) is heated before the application of said punch (10).

9. The method according to any one of claims 1 to 8, **characterized in that** before applying said punch (10), said blank (1; 18; 33) is inserted in the container (5) of a press, a space being arranged between said blank (1; 18; 33) and the inner wall of said container (5) to allow the expansion of said blank (1; 18; 33).

10. The method according to one of claims 1 to 9, **characterized in that** the punch (10) and the sacrificial mandrel (2; 19; 34, 35) are made up of the same part.

11. The method according to one of claims 1 to 11, **characterized in that** said blank (1; 18; 33) is a Ti alloy of type Ti-10-2-3, said sacrificial mandrels (2; 19; 34, 35) are each made from a steel chosen from steels of types E28-3 and E24-2.

12. The method according to one of claims 1 to 11, **characterized in that** the blank (33) is not expanded over its entire length and said sacrificial mandrel (35) does not extend over the entire length of said blank (33), and said blank (33) is turned over, said punch (10) is applied on the other end of said blank (33), and the expansion of another portion of said blank (33) is done by creating another internal space of said blank (33), and another sacrificial mandrel (34) is inserted into said other internal space of said blank (33).

13. A use of the method according to any one of claims 1 to 12 to produce a landing gear rod (21).

14. A use of the method according to claim 12 to produce a landing gear beam (46).
